# EUROPÄISCHE PATENTSCHRIFT

(11) **EP 3 541 522 B1**
(45) Veröffentlichungstag und Bekanntmachung des Hinweises auf die Patenterteilung: **18.08.2021**
(21) Anmeldenummer: 17809213.6
(22) Anmeldetag: 16.11.2017
(51) Int. Cl.: B02C 4/42

(54) **WELLE UND EINE ANTRIEBSEINRICHTUNG ZUM ANTRIEB EINER ZERKLEINERUNGSEINRICHTUNG**
SHAFT AND A DRIVE DEVICE FOR DRIVING A COMMINUTION DEVICE
ARBRE ET DISPOSITIF D'ENTRAÎNEMENT SERVANT À L'ENTRAÎNEMENT D'UN DISPOSITIF DE BROYAGE

(30) Priorität: 18.11.2016 DE 102016222747
(43) Veröffentlichungstag der Anmeldung: 25.09.2019
(73) Patentinhaber: thyssenkrupp Industrial Solutions AG, 45143 Essen (DE); thyssenkrupp AG, 45143 Essen (DE)
(72) Erfinder: PETERS, Alexander, 59269 Beckum (DE); AUSTRUP, Daniel, 48145 Münster (DE); FRERICH, Daniel, 59556 Lippstadt (DE)
(74) Vertreter: thyssenkrupp Intellectual Property GmbH
(86) Internationale Anmeldenummer: PCT/EP2017/079512
(87) Internationale Veröffentlichungsnummer: WO 2018/091610

(56) Entgegenhaltungen:
- DE-A1- 3 639 586
- US-A- 3 020 735
- US-A- 3 140 835

## Beschreibung

Die Erfindung betrifft eine Welle und eine Antriebseinrichtung zum Antrieb einer Zerkleinerungseinrichtung zur Zerkleinerung von körnigem Gut oder zum Antrieb einer Trommel, insbesondere eines thermischen Behandlungsaggregats oder eines Siebes. Die Erfindung betrifft auch ein Verfahren zum Anbringen einer Welle zum Antrieb einer Walze einer Zerkleinerungseinrichtung oder zum Antrieb eines thermischen Behandlungsaggregats oder eines Siebes an einem Getriebe.

In der Zementindustrie werden Antriebseinrichtungen insbesondere zum Antrieb von Zerkleinerungseinrichtungen, wie beispielsweise Mahlwalzen, oder zum Antrieb von Trommel, insbesondere Siebe oder thermische Behandlungsaggregate, wie ein Drehrohrofen, eingesetzt. Eine solche Antriebseinrichtung umfasst ein Getriebe, das mit einer Welle zum Antrieb der Zerkleinerungseinrichtung oder der Trommel verbunden wird. Der Antrieb einer Zerkleinerungseinrichtung oder beispielsweise eines Drehrohrofens erfordert eine hohe Antriebsleitung von mehr als 500kW, wobei hohe Momente von mehr als 300kNm übertragen werden.

Die Montage des mit bis zu 50t vergleichsweise schweren Getriebes auf die anzutreibende Welle ist sehr aufwendig. Eine Getriebeverbindung ist beispielsweise aus der DE 3639586 bekannt. Bei der Montage und Demontage des schwergewichtigen Getriebes an der Welle muss das Getriebe fluchtend auf einer Achse mit der anzutreibenden Welle liegen und vertikal und horizontal genau ausgerichtet werden. Eine ungenaue Ausrichtung des Getriebes resultiert beispielsweise in einem Fressen der Passung beim anschließenden Aufschieben des Getriebes auf die Welle. Dies erfordert eine Demontage des Getriebes von der Welle, sowie eine Nachbearbeitung und erneute Montage des Getriebes.

Davon ausgehend ist es Aufgabe der vorliegenden Erfindung, eine Welle und eine Antriebseinrichtung einer Zerkleinerungseinrichtung oder einer Trommel bereitzustellen, die eine einfache Montage und Demontage des Getriebes von der Welle ermöglichen.

Diese Aufgabe wird erfindungsgemäß durch eine Antriebsvorrichtung mit den Merkmalen des unabhängigen Vorrichtungsanspruchs 1 und des unabhängigen Verfahrensanspruchs 9 gelöst. Vorteilhafte Weiterbildungen ergeben sich aus den abhängigen Ansprüchen.

Eine Antriebseinrichtung zum Antreiben einer Zerkleinerungseinrichtung zur Zerkleinerung von körnigem Gut oder zum Antreiben einer Trommel eines thermischen Behandlungsaggregats oder ein Siebes, weist nach einem ersten Aspekt zumindest eine Welle auf, die einen Endbereich aufweist, an dem eine Hohlwelle eines Getriebes anbringbar ist und wobei der Endbereich der Welle zumindest teilweise konisch ausgebildet ist. An dem Endbereich der Welle ist ein Getriebe angebracht, wobei das Getriebe eine Hohlwelle aufweist, die mittels einer Spanneinrichtung auf dem Endbereich der Welle befestigt ist, wobei die Hohlwelle eine zu dem Endbereich der Welle komplementär ausgebildete konische Innenfläche aufweist. Insbesondere ist der gesamte Endbereich der Welle konisch ausgebildet, wobei die Mittelachse des Endbereichs mit der Mittelachse der Welle kollinear ist. Der Endbereich der Welle ist vorzugsweise absatzfrei ausgebildet. Die Welle ist insbesondere kollinear zu der Hohlwelle angeordnet. Bei dem Getriebe handelt es sich beispielsweise um ein Planetengetriebe, insbesondere ein Untersetzungsplanetengetriebe.

Bei einer Zerkleinerungseinrichtung handelt es sich beispielsweise um eine Walzenmühle mit zwei Mahlwalzen, die gegenläufig antreibbar sind und einen Mahlspalt ausbilden. Jede oder zumindest eine der Mahlwalzen umfasst eine voran beschriebene Welle, auf der jeweils ein Getriebe angebracht ist, über das die jeweilige Welle angetrieben wird. Eine Zerkleinerungseinrichtung umfasst des Weiteren eine Kugelmühle, eine Walzenpresse, ein Walzenbrecher, eine Rollenmühle oder eine Schlagmühle mit einer voran beschriebenen Welle. Bei einem thermischen Behandlungsaggregat handelt es sich beispielsweise um einen Drehrohrofen einer Zementanlage zum Brennen von Zementklinker oder um einen Trommelkühler zum Kühlen von Zementklinker, die jeweils eine voran beschriebene Welle aufweisen. Bei dem Sieb handelt es sich beispielsweise um ein Trommelsieb zum Klassieren von körnigem Gut mit einer voran beschriebenen Welle. Zum Antrieb einer Trommel weist die Welle insbesondere einen Antriebsring, vorzugsweise einen Zahnkranz auf, der sich umfangsmäßig um die Welle erstreckt.

Eine Welle mit einem konisch ausgebildeten Endbereich, an dem eine Hohlwelle eines Getriebes anbringbar ist bietet den Vorteil einer einfachen Montage der Hohlwelle des Getriebes auf der Welle. Die konische Ausbildung der Welle bewirkt eine selbstständige zentrierte bzw. kollineare Ausrichtung der Welle innerhalb der Hohlwelle, wobei Fehler bei der Ausrichtung der Hohlwelle zu der Welle ausgeglichen werden.

Beispielsweise weist der konische, insbesondere kegelstumpfförmige Endbereich der Welle einen Kegelwinkel von etwa 10° bis 20°, vorzugsweise 1° bis 15°, insbesondere 3° bis 6° auf. Unter einem Kegelwinkel ist der Öffnungswinkel des Kegels zu verstehen, insbesondere der Kegelwinkel gemäß DIN EN ISO 3040.

Ein solcher Kegelwinkel bietet den Vorteil der Selbsthemmung zur Drehmomentübertragung und die Möglichkeit zur einfachen Demontage.

Die Hohlwelle weist eine zu dem Endbereich der Welle komplementär ausgebildete konische, insbesondere kegelstumpfförmige Innenfläche auf. Die konische Innenfläche der Hohlwelle ist insbesondere spielfrei auf dem konischen Endbereich der Welle angebracht. Eine Hohlwelle mit einer zu dem Endbereich der Welle komplementär ausgebildete konische Innenfläche ermöglicht, dass bereits bei der Montage der Hohlwelle auf der Welle bereits eine spielfreie Positionierung der Hohlwelle auf der Welle erreicht wird. Die Spanneinrichtung stellt anschließend lediglich die kraftschlüssige Verbindung der Hohlwelle und der Welle her. Daraus resultiert eine erhebliche Zeitersparnis bei der Montage der Hohlwelle auf der Welle. Auch bei der Demontage bietet eine solche Ausgestaltung den Vorteil, dass bereits bei einer geringen relativen Bewegung in axialer Richtung der Hohlwelle und der Welle in entgegengesetzter Richtung ein Spalt zwischen diesen ausgebildet ist, sodass die weitere Demontage stark vereinfacht wird.

Die Innenfläche der Hohlwelle mit dem konischen Endbereich der Welle kraftschlüssig verbunden. Die Innenfläche der Hohlwelle ist vorzugsweise mittels der Spanneinrichtung kraftschlüssig mit dem konischen Endbereich der Welle verbunden, wobei die Spanneinrichtung die Hohlwelle mit einer insbesondere radialen Spannkraft beaufschlagt, um die kraftschlüssige Verbindung zu erzeugen. Insbesondere sind die Welle und die Hohlwelle ausschließlich über den konischen Endbereich der Welle und die konische Innenfläche der Hohlwelle miteinander verbunden.

Die Spanneinrichtung umschließt gemäß einer weiteren Ausführungsform die Hohlwelle und ist koaxial zu dieser angebracht. Gemäß einer weiteren Ausführungsform umfasst die Spanneinrichtung zumindest eine Schrumpfscheibe. Die zumindest eine Schrumpfscheibe ist vorzugsweise kreisringförmig ausgebildet und koaxial um die Hohlwelle angebracht. Insbesondere weist die Spanneinrichtung zwei kreisringförmige Scheiben auf, die jeweils eine konische Fläche aufweisen und koaxial zueinander und der Hohlwelle angeordnet sind. Die äußere Scheibe weist beispielsweise eine konische Innenfläche auf, die auf einer komplementär ausgebildeten konischen Außenfläche der inneren Scheibe aufliegt. Zum Spannen der Spanneinrichtung werden beispielsweise mittels einer Spannschraube die äußere und die innere Scheibe relativ zueinander bewegt, sodass der Durchmesser der inneren, auf der Hohlwelle angebrachten Scheibe verringert wird. Der Durchmesser der Schrumpfscheibe ist gemäß einer weiteren Ausführungsform mechanisch oder hydraulisch verringerbar.

In der Welle oder in der Hohlwelle ist gemäß einer weiteren Ausführungsform eine Demontageeinrichtung angeordnet, mittels welcher die Hohlwelle mit einer Kraft beaufschlagbar ist, sodass die Hohlwelle von der Walzenwelle gelöst wird. Die Demontageeinrichtung umfasst gemäß einer weiteren Ausführungsform eine Hydraulikleitung. Insbesondere ist die Hydraulikleitung in der Welle angeordnet und erstreckt sich vorzugsweise bis zu dem konischen Endbereich. Dies bietet den Vorteil einer schnellen und einfachen Demontage der Hohlwelle. Lediglich ein Lösen der spielfreien Verbindung der Hohlwelle mit der Welle ist notwendig, um die Hohlwelle von der Welle zu bewegen.

Die Hohlwelle ist gemäß einer weiteren Ausführungsform lösbar mit dem Getriebe verbunden. Auch der kegelstumpfförmige Endbereich ist gemäß einer weiteren Ausführungsform lösbar an der Welle angebracht. Dadurch wird ein Austausch der verschleißanfälligen Bereiche der Welle und der Hohlwelle ermöglicht, ohne das gesamte Getriebe oder die gesamte Welle demontieren zu müssen.

Die Erfindung betrifft des Weiteren ein Verfahren zum Anbringen einer voran beschriebenen Welle einer Walze einer Zerkleinerungseinrichtung oder zum Antrieb eines thermischen Behandlungsaggregats oder eines Siebes an einem Getriebe mit einer Hohlwelle, wobei die Hohlwelle eine zu dem Endbereich der Welle komplementär ausgebildete konische Innenfläche aufweist und, wobei die Hohlwelle des Getriebes auf den konischen Endbereich der Welle aufgeschoben wird und, die konische Innenfläche der Hohlwelle mit dem konischen Endbereich der Welle kraftschlüssig verbunden wird, sodass sich die Hohlwelle relativ zu der Welle zentriert.

Die mit Bezug auf die Welle und die Antriebseinrichtung beschriebenen Vorteile treffen in verfahrensmäßiger Entsprechung auch auf das Verfahren zum Anbringen der Welle auf der Hohlwelle zu.

Die Hohlwelle wird gemäß einer weiteren Ausführungsform derart auf die Welle aufgeschoben, dass sie spielfrei auf der Welle angeordnet ist. Gemäß einer weiteren Ausführungsform wird die Hohlwelle im Anschluss an das Aufschieben auf die Welle mittels einer Spanneinrichtung mit der Welle kraftschlüssig verbunden.

Die Spanneinrichtung umfasst gemäß einer weiteren Ausführungsform eine Schrumpfscheibe, deren Durchmesser mechanisch oder hydraulisch verringert wird.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung einer Zerkleinerungseinrichtung in einer Seitenansicht gemäß einem Ausführungsbeispiel.
- Fig. 2: zeigt eine schematische Darstellung einer Getriebeanbindung an eine Walzenwelle in einer Schnittansicht gemäß einem Ausführungsbeispiel.
- Fig. 3: zeigt eine schematische Darstellung einer Getriebeanbindung an eine Walzenwelle in einer Schnittansicht gemäß einem weiteren Ausführungsbeispiel.
- Fig. 4: zeigt eine schematische Darstellung einer Getriebeanbindung an eine Walzenwelle in einer Schnittansicht gemäß einem Ausführungsbeispiel.
- Fig. 5: zeigt eine schematische Darstellung einer Getriebeanbindung an einer Welle eines Antriebs für einen Drehrohrofen in einer Schnittansicht gemäß einem weiteren Ausführungsbeispiel.

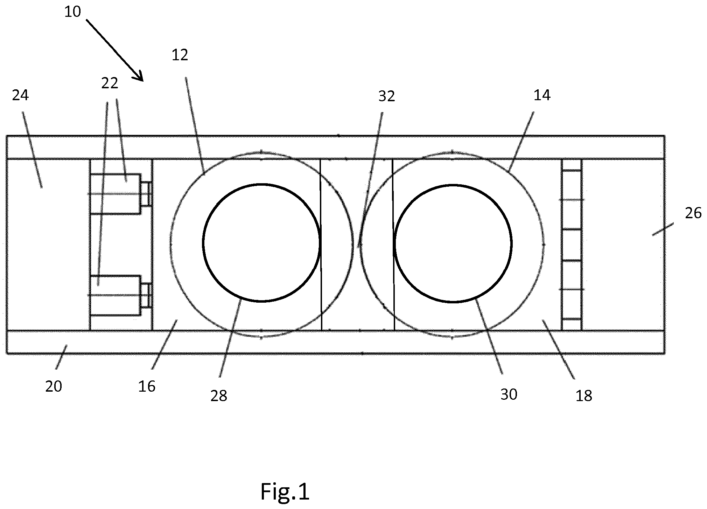

Fig. 1 zeigt eine Zerkleinerungseinrichtung 10, insbesondere eine Walzenmühle zur Zerkleinerung von sprödem Material wie beispielsweise Zementrohmehl, Zementklinker, Erze oder ähnliche spröde und stark verschleißende Schüttgüter. Die Zerkleinerungseinrichtung 10 weist zwei Walzen 12, 14 auf, die über entsprechende Lager in Lagersteinen 16, 18 drehbar gelagert sind. Die Lagersteine 16, 18 sind dabei axial verschiebbar in einem entsprechenden Rahmen 20 geführt. Die Walze 12 ist als Loswalze ausgeführt und wird über eine Kraftbeaufschlagungseinrichtung, insbesondere entsprechende Zylinder 22 gegen die andere Mahlwalze 14 gedrückt. Die Zylinder 22 stützen sich an einem entsprechenden Druckbalken 24 ab. Die zweite Walze 14 ist als Festwalze ausgebildet und in radialer nach Außen weisender Richtung der Walzen 12, 14 an dem Rahmen 20 und an der Walzenabstützung 26 angebracht. Die zur Zerkleinerung erforderliche Mahlkraft wird über die Kraftbeaufschlagungseinrichtung erzeugt, wobei die Mahlkraft über die Walzen 12, 14, den Rahmen 20 und die Lagersteine 16, 18 übertragen wird. Zwischen den Walzen 12, 14 ist ein Mahlspalt 32 ausgebildet, in dem die Zerkleinerung des Materials erfolgt. Im Betrieb werden in dem Mahlspalt Drücke von bis zu 250 MPa erzeugt.

Jede der Walzen 12, 14 weist an einem Endbereich ein schematisch in Fig. 1 dargestelltes Getriebe 28,30 auf, das mit einem nicht dargestellten Antrieb verbunden ist und über welches die Mahlwalzen 12, 14 zur gegenläufigen Rotation angetrieben werden. Bei dem Getriebe 28, 30 handelt es sich beispielsweise um ein Planetengetriebe, insbesondere ein Untersetzungsplanetengetriebe. Die Verbindung zwischen dem Getriebe 28, 30 und den Endbereichen der Walzen 12, 14 ist mit Bezug auf die folgenden Figuren erläutert.

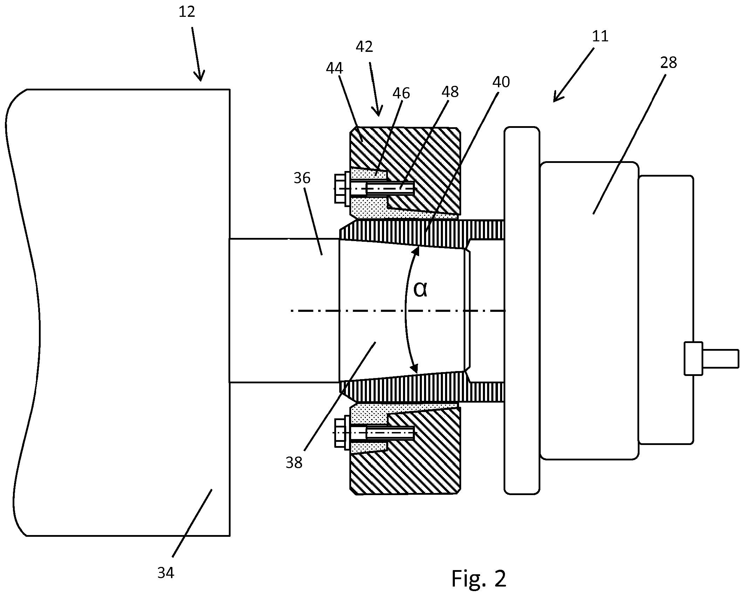

In Fig. 2 ist ein Bereich einer Walze 12 der Zerkleinerungseinrichtung 10 dargestellt. Beispielhaft ist lediglich eine Walze 12 dargestellt, wobei die zweite Walze 14 eine entsprechende Ausgestaltung aufweisen kann. An der Walze 12 ist eine Antriebseinrichtung 11 angebracht, die eine Welle 36 umfasst, die sich axial durch den Walzenmantel 34 der Walze 12 ersteckt. Der Endbereich 38 der Welle 36 steht aus dem in Fig. 2 nicht dargestellten Rahmen 20 der Zerkleinerungseinrichtung 10 hervor und erstreckt sich über den Walzenmantel 34 der Walze 12 hinaus.

Der Endbereich 38 der Welle 36 ist zumindest teilweise konisch zulaufend, insbesondere kegelstumpfförmig ausgebildet, wobei der Kegelstumpf in axialer Richtung nach außen zulaufend ausgebildet ist. Der Endbereich ist beispielsweise in einem Kegelwinkel (a) von 1° bis 15° relativ zu der Mittelachse der Welle 36 zulaufend ausgebildet.

Die Antriebseinrichtung 11 weist des Weiteren ein Getriebe 28 mit einer Hohlwelle 40 auf, die auf dem Endbereich 38 der Welle 36 angeordnet ist. Die Hohlwelle 40 ist eine Getriebehohlwelle des Getriebes 28, 30, deren Innenfläche konisch ausgebildet ist. Die Innenfläche der Hohlwelle 40 ist komplementär zu der konischen Fläche des Endbereichs der Welle 36 ausgebildet und wirkt mit dieser zusammen. Der konische Bereich der Innenfläche der Hohlwelle 40 schließt mit dem Ende der Welle 36 ab. Im Anschluss an den konischen Bereich ist die Hohlwelle 40 beispielhaft in axialer Richtung zylindrisch ausgebildet.

Die konisch ausgebildete Innenfläche der Hohlwelle 40 ist auf dem konisch ausgebildeten Endbereich 38 der Welle 36 spielfrei und kraftschlüssig befestigt. Zur Befestigung der Hohlwelle 40 auf dem Endbereich 38 der Welle 36 ist umfangsmäßig um die Hohlwelle 40 und den konischen Bereich der Welle 36 eine Spanneinrichtung 42 angeordnet. Bei der Spanneinrichtung 42 handelt es sich vorzugsweise um eine in Fig. 2 bis 4 dargestellte Schrumpfscheibe, die eine erste Scheibe 44 und eine zweite Scheibe 46 aufweist. Die erste und die zweite Scheibe 44, 46 sind jeweils im Wesentlichen kreisringförmig ausgebildet und weisen jeweils eine konische Fläche auf. Die erste radial äußere Scheibe 44 weist an ihrer inneren, der Hohlwelle 40 zugewandten Seite eine konische Fläche auf, wobei die zweite radial innere Scheibe 46 an ihrer äußeren, der ersten Scheibe zugewandten Seite eine konische Fläche aufweist. Die erste und die zweite Scheibe 44, 46 liegen mit ihren konischen Flächen aneinander an und sind mittels Schrauben 48 relativ zueinander bewegbar, sodass die konischen Flächen der Scheiben 44, 46 eine radiale Presskraft der Spanneinrichtung 42 auf die Hohlwelle 40 erzeugen. Der Durchmesser der kreisringförmigen Spanneinrichtung 42 und der Hohlwelle 40 werden durch das Verspannen der Spanneinrichtung 42 derart verringert, dass zwischen der Hohlwelle 40 und dem Endbereich 38 der Welle 36 eine spielfreie, kraftschlüssige Verbindung entsteht.

Zur Montage der Hohlwelle 40 des Getriebes 28 auf den Endbereich 38 der Welle 36 wird die Hohlwelle 40 auf die Welle 36 aufgeschoben. Die konische, insbesondere kegelstumpfförmige Ausbildung des Endbereichs 38 der Welle 36 und der Innenfläche der Hohlwelle 40 sorgt für ein einfaches Zentrieren der Welle 36 in der Hohlwelle. Des Weiteren wird bei der Montage der Hohlwelle 40 auf der Welle 36 bereits eine spielfreie Positionierung der Hohlwelle 40 auf der Welle 36 erreicht, wobei die Spanneinrichtung 42 lediglich die kraftschlüssige Verbindung der Hohlwelle 40 und der Walzenwelle 36 herstellt. Eine solche Ausbildung des Endbereichs der Welle 36 und der Innenfläche der Hohlwelle 40 ermöglicht eine erhebliche Zeitersparnis bei der Montage der Hohlwelle 40 auf der Welle 36. Auch bei der Demontage bietet eine solche Ausgestaltung den Vorteil, dass bereits bei einer geringen relativen Bewegung der Hohlwelle 40 und der Welle 36 in entgegengesetzter Richtung ein Spalt zwischen diesen ausgebildet ist, sodass die weitere Demontage stark vereinfacht wird.

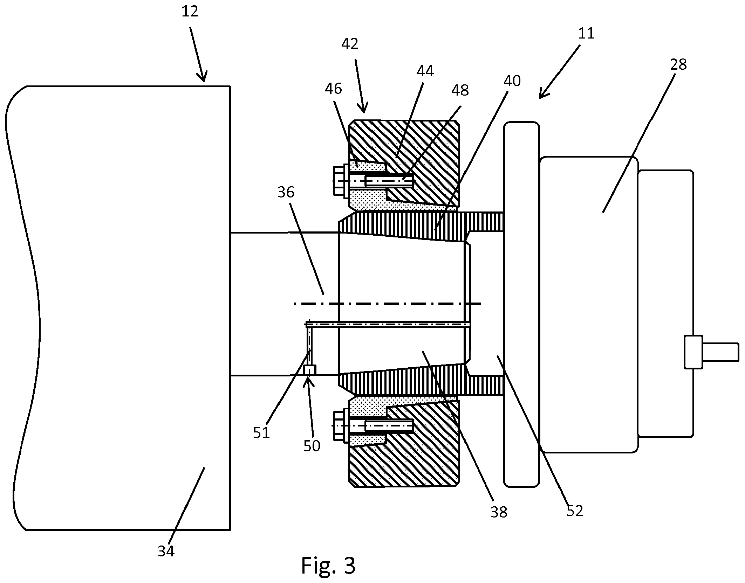

Fig. 3 zeigt eine Antriebseinrichtung 11 mit einer Welle 36 und einem Getriebe 28 gemäß der Fig. 2, wobei der Endbereich 38 der Welle 36 mit der Hohlwelle 40 des Getriebes 28 verbunden ist. Im Unterschied zu der Fig. 2 zeigt die Fig. 3 zusätzlich eine Demontageeinrichtung 50, die eine Hydraulikleitung 51 zum Leiten von Hydraulikflüssigkeit umfasst. Die Hydraulikleitung 51 der Demontageeinrichtung 50 verläuft innerhalb der Welle 36 von dem Ende des Endbereichs 38 der Welle 36 in axialer Richtung durch den Endbereich 38 hindurch. Im Anschluss an den Endbereich 38 verläuft die Hydraulikleitung in radialer Richtung an die Oberfläche der Welle 36. An die Hydraulikleitung 51 sind weitere in Fig. 3 nicht dargestellte Hydraulikkomponenten, wie eine Pumpe und weitere Leitungen angeschlossen. An dem Ende der Welle 36 mündet die Hydraulikleitung 51 in einen zwischen der Welle 36, der Hohlwelle 40 und dem Getriebe 28, ausgebildeten und abgeschlossenen Raum 52.

Zur Demontage der Hohlwelle 40 von dem Endbereich 38 der Welle 36 wird der Raum 52 mit Hydraulikflüssigkeit gefüllt, sodass die Welle 36 und die Hohlwelle 40 mit einer axialen Kraft beaufschlagt werden, die einer Bewegung der Hohlwelle 40 relativ zu der Welle 36 resultiert. Bei einer geringen Bewegung der Hohlwelle 40 relativ zu der Welle 36 bildet sich bereits ein Spalt zwischen der Hohlwelle 40 und der Welle 36 aus, der mit Hydraulikflüssigkeit gefüllt wird und eine Relativbewegung der Hohlwelle 40 und der Welle 36 erleichtert.

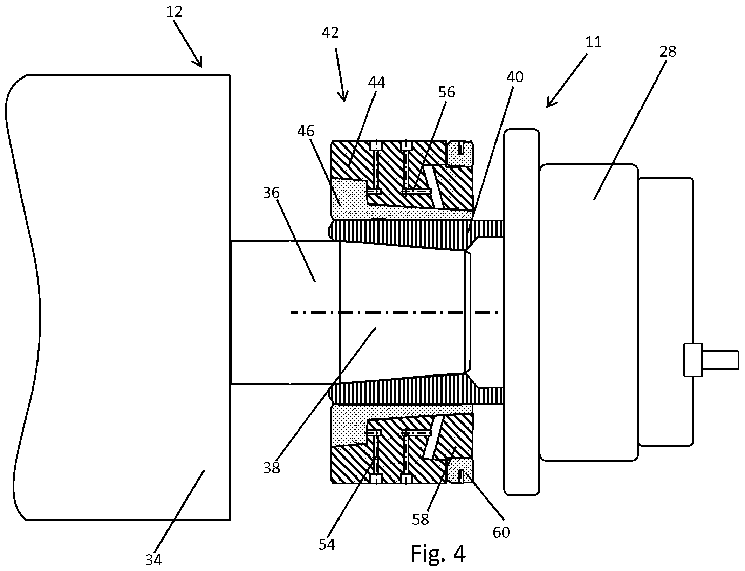

Fig. 4 zeigt eine Antriebseinrichtung 11 mit einer Welle 36 und einer Hohlwelle 40 des Getriebes 28, wie bereits mit Bezug auf Fig. 2 und 3 beschrieben. Im Unterschied zu den Fig. 2 und 3 ist die Spanneinrichtung 42 der Fig. 4 hydraulisch betätigbar ausgebildet. Innerhalb der ersten Scheibe 44 der Spanneinrichtung 42 sind eine erste Hydraulikleitung 54 und eine zweite Hydraulikleitung 56 einer Hydraulikeinrichtung angeordnet. Die erste Scheibe 44 ist relativ zu einem stationären Ring 58 bewegbar angeordnet, wobei zwischen dem Ring 58 und der ersten Scheibe ein Raum ausgebildet ist in den Hydraulikflüssigkeit aus der zweiten Hydraulikleitung 56 strömbar ist. Zum Verspannen wird der Raum mit Hydraulikflüssigkeit beaufschlagt, wobei die erste Scheibe 44 auf die zweite Scheibe 46 bewegt wird. Anschließend wird die erste Scheibe 44 mit einem Sicherungsring 60 gesichert.

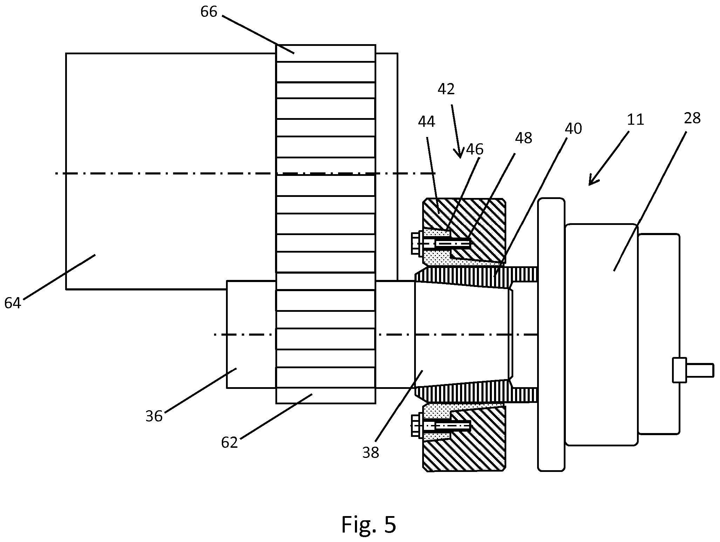

Fig. 5 zeigt eine Antriebseinrichtung 11 mit einer Welle 36 und einer Hohlwelle 40 des Getriebes 28, wie bereits mit Bezug auf Fig. 2 beschrieben. Im Unterschied zu Fig. 2 ist auf der Welle 36 der Fig. 5 kein Walzenmantel 34 einer Walze angebracht. Die Welle 36 der Fig. 5 weist einen Antriebsring 62 auf, der sich umfangsmäßig um die Welle erstreckt. Bei dem Antriebsring 62 handelt es sich beispielsweise um einen Zahnkranz. Des Weiteren zeigt die Fig. 5 zusätzliche einen Ofen 34, insbesondere einen Drehrohrofen, wobei umfangsmäßig um den Ofen 64 ein Abtriebsring 66 angebracht ist, bei dem es sich ebenfalls beispielsweise um einen Zahnkranz handelt. Der Abtriebsring 66 steht mit dem auf der Welle 36 angebrachten Antriebring 62 im Eingriff, sodass der Ofen 64 durch die Rotation der Welle 36 zur Rotation um seine Längsachse angetrieben wird. Die Welle 36 wird über das Getriebe 28 zur Rotation angetrieben.

Die Ausgestaltung der Welle 36, sowie der mit dem Getriebe 28 verbundenen Hohlwelle 40 entspricht der der Fig. 2.

### Bezugszeichenliste

- 10: Zerkleinerungseinrichtung
- 11: Antriebseinrichtung
- 12: Walze
- 14: Walze
- 16: Lagerstein
- 18: Lagerstein
- 20: Rahmen
- 22: Zylinder
- 24: Druckbalken
- 26: Walzenabstützung
- 28: Getriebe
- 30: Getriebe
- 32: Mahlspalt
- 34: Walzenmantel
- 36: Welle
- 38: Endbereich der Welle 36
- 40: Hohlwelle
- 42: Spanneinrichtung
- 44: erste Scheibe
- 46: zweite Scheibe
- 48: Schraube
- 50: Demontageeinrichtung
- 51: Hydraulikleitung
- 52: Raum
- 54: erste Hydraulikleitung
- 56: zweite Hydraulikleitung
- 58: stationärer Ring
- 60: Sicherungsring
- 62: Antriebsring
- 64: Ofen
- 66: Abtriebsring

## Patentansprüche

1. Antriebseinrichtung (11) zum Antreiben einer Zerkleinerungseinrichtung (10) zur Zerkleinerung von körnigem Gut oder zum Antreiben einer Trommel eines thermischen Behandlungsaggregats oder eines Siebes, aufweisend
zumindest eine Welle (36), die einen zumindest teilweise konisch ausgebildeten Endbereich (38) aufweist,
wobei an einem Endbereich (38) der Welle (36) ein Getriebe (28, 30) angebracht ist, und wobei das Getriebe (28, 30) eine Hohlwelle (40) aufweist, die mittels einer Spanneinrichtung (42) auf dem Endbereich (38) der Welle (36) befestigt ist,
wobei die Hohlwelle (40) eine zu dem Endbereich (38) der Welle (36) komplementär ausgebildete konische Innenfläche aufweist und
die konische Innenfläche der Hohlwelle (40) mit dem konischen Endbereich (38) der Welle (36) kraftschlüssig verbunden ist.

2. Antriebseinrichtung (11) nach Anspruch 1, wobei die Spanneinrichtung (42) die Hohlwelle (40) umschließt und koaxial zu dieser angebracht ist.

3. Antriebseinrichtung (11) nach einem der Ansprüche 1 und 2, wobei die Spanneinrichtung (42) zumindest eine Schrumpfscheibe umfasst.

4. Antriebseinrichtung (11) nach Anspruch 3, wobei der Durchmesser der Schrumpfscheibe mechanisch oder hydraulisch verringerbar ist.

5. Antriebseinrichtung (11) nach einem der vorangehenden Ansprüche, wobei in der Welle (36) oder in der Hohlwelle (40) eine Demontageeinrichtung (50) angeordnet ist, mittels welcher die Hohlwelle (40) mit einer Kraft beaufschlagbar ist, sodass die Hohlwelle (40) von der Walzenwelle (36) gelöst wird.

6. Antriebseinrichtung (11) nach Anspruch 5, wobei die Demontageeinrichtung (50) eine Hydraulikleitung (51) umfasst.

7. Antriebseinrichtung (11) nach einem der vorangehenden Ansprüche, wobei die Hohlwelle (40) lösbar mit dem Getriebe (28, 30) verbunden ist.

8. Antrieb nach einem der vorangehenden Ansprüche, wobei der kegelstumpfförmige Endbereich (38) lösbar an der Welle (36) angebracht ist.

9. Verfahren zum Anbringen einer Welle (36) einer Zerkleinerungseinrichtung (10) zur Zerkleinerung von körnigem Gut oder einer Trommel eines thermischen Behandlungsaggregats oder eines Siebes an einem Getriebe (28, 30) mit einer Hohlwelle (40), wobei die Welle (36) zumindest einen Endbereich aufweist, an dem eine Hohlwelle (40) eines Getriebes (28, 30) anbringbar ist und
wobei der Endbereich der Welle (36) zumindest teilweise konisch ausgebildet ist,
wobei die Hohlwelle (40) eine zu dem Endbereich (38) der Welle (36) komplementär ausgebildete konische Innenfläche aufweist und,
wobei die Hohlwelle (40) des Getriebes (28, 30) auf den konischen Endbereich (38) der Welle (36) aufgeschoben und die konische Innenfläche der Hohlwelle (40) mit dem konischen Endbereich (38) der Welle (36) kraftschlüssig verbunden wird, sodass sich die Hohlwelle (40) relativ zu der Welle (36) zentriert.

10. Verfahren nach Anspruch 9, wobei die Hohlwelle (40) derart auf die Welle (36) aufgeschoben wird, dass diese spielfrei auf der Welle (36) angeordnet ist.

11. Verfahren nach Anspruch 9 oder 10, wobei die Hohlwelle (40) im Anschluss an das Aufschieben auf die Welle (36) mittels einer Spanneinrichtung (42) mit der Welle (36) kraftschlüssig verbunden wird.

## Claims

1. Drive device (11) for driving a comminution device (10) for comminuting granular material or for driving a drum of a thermal treatment unit or of a screen, having at least one shaft (36) which has an at least partially conically formed end region (38), wherein a gear mechanism (28, 30) is mounted on an end region (38) of the shaft (36), and wherein the gear mechanism (28, 30) has a hollow shaft (40) which is fastened on the end region (38) of the shaft (36) by means of a clamping device (42), wherein the hollow shaft (40) has a conical inner surface which is designed to be complementary to the end region (38) of the shaft (36), and the conical inner surface of the hollow shaft (40) is connected to the conical end region (38) of the shaft (36) in a force-fitting manner.

2. Drive device (11) according to Claim 1, wherein the clamping device (42) encloses the hollow shaft (40) and is mounted coaxially thereto.

3. Drive device (11) according to either of Claims 1 and 2, wherein the clamping device (42) comprises at least one shrink disc.

4. Drive device (11) according to Claim 3, wherein the diameter of the shrink disc can be mechanically or hydraulically reduced.

5. Drive device (11) according to one of the preceding claims, wherein the shaft (36) or the hollow shaft (40) has arranged therein a demounting device (50) by means of which the hollow shaft (40) can be subjected to a force, with the result that the hollow shaft (40) is released from the roller shaft (36) .

6. Drive device (11) according to Claim 5, wherein the demounting device (50) comprises a hydraulic line (51) .

7. Drive device (11) according to one of the preceding claims, wherein the hollow shaft (40) is releasably connected to the gear mechanism (28, 30).

8. Drive according to one of the preceding claims, wherein the frustoconical end region (38) is releasably mounted on the shaft (36).

9. Method for mounting a shaft (36) of a comminution device (10) for comminuting granular material or a drum of a thermal treatment unit or a screen on a gear mechanism (28, 30) having a hollow shaft (40), wherein the shaft (36) has at least one end region on which a hollow shaft (40) of a gear mechanism (28, 30) can be mounted, and wherein the end region of the shaft (36) is at least partially conical in form, wherein the hollow shaft (40) has a conical inner surface which is designed to be complementary to the end region (38) of the shaft (36), and wherein the hollow shaft (40) of the gear mechanism (28, 30) is pushed onto the conical end region (38) of the shaft (36), and the conical inner surface of the hollow shaft (40) is connected to the conical end region (38) of the shaft (36) in a force-fitting manner, with the result that the hollow shaft (40) is centred relative to the shaft (36).

10. Method according to Claim 9, wherein the hollow shaft (40) is pushed onto the shaft (36) in such a way as to be arranged on the shaft (36) in a play-free manner.

11. Method according to Claim 9 or 10, wherein the hollow shaft (40), subsequently to being pushed onto the shaft (36), is connected to the shaft (36) in a force-fitting manner by means of a clamping device (42) .

## Revendications

1. Dispositif d'entraînement (11) destiné à entraîner un dispositif de broyage (10), destiné à broyer un matériau granulaire, ou à entraîner un tambour d'une unité de traitement thermique ou un tamis, ledit dispositif d'entraînement comportant
au moins un arbre (36) qui comporte une zone d'extrémité (38) au moins partiellement conique,
une transmission (28, 30) étant fixée à une zone d'extrémité (38) de l'arbre (36), et
la transmission (28, 30) comportant un arbre creux (40) qui est fixé sur la zone d'extrémité (38) de l'arbre (36) au moyen d'un dispositif de serrage (42),
l'arbre creux (40) comportant une surface intérieure conique complémentaire de la zone d'extrémité (38) de l'arbre (36) et
la surface intérieure conique de l'arbre creux (40) est reliée en force à la zone d'extrémité conique (38) de l'arbre (36).

2. Dispositif d'entraînement (11) selon la revendication 1, le dispositif de serrage (42) enserrant l'arbre creux (40) et étant fixé coaxialement à celui-ci.

3. Dispositif d'entraînement (11) selon l'une des revendications 1 et 2, le dispositif de serrage (42) comprenant au moins un disque fretté.

4. Dispositif d'entraînement (11) selon la revendication 3, le diamètre du disque fretté peut être réduit mécaniquement ou hydrauliquement.

5. Dispositif d'entraînement (11) selon l'une des revendications précédentes, un dispositif de démontage (50) étant disposé dans l'arbre (36) ou dans l'arbre creux (40) et permettant de soumettre l'arbre creux (40) à une force de manière à libérer l'arbre creux (40) de l'arbre de rouleau (36).

6. Dispositif d'entraînement (11) selon la revendication 5, le dispositif de démontage (50) comprenant une conduite hydraulique (51).

7. Dispositif d'entraînement (11) selon l'une des revendications précédentes, l'arbre creux (40) étant relié de manière amovible à la transmission (28, 30).

8. Entraînement selon l'une des revendications précédentes, la zone d'extrémité tronconique (38) étant fixée de manière amovible à l'arbre (36).

9. Procédé de fixation d'un arbre (36) d'un dispositif de broyage (10), destiné à broyer un matériau granulaire, ou d'un tambour d'une unité de traitement thermique ou d'un tamis à une transmission (28, 30) pourvue d'un arbre creux (40), l'arbre (36) comportant au moins une zone d'extrémité à laquelle peut être fixé un arbre creux (40) d'une transmission (28, 30) et
la zone d'extrémité de l'arbre (36) étant au moins partiellement conique,
l'arbre creux (40) comportant une surface intérieure conique complémentaire de la zone d'extrémité (38) de l'arbre (36) et,
l'arbre creux (40) de la transmission (28, 30) étant poussé sur la zone d'extrémité conique (38) de l'arbre (36) et la surface intérieure conique de l'arbre creux (40) étant reliée en force à la zone d'extrémité conique (38) de l'arbre (36) de manière à centrer l'arbre creux (40) par rapport à l'arbre (36).

10. Procédé selon la revendication 9, l'arbre creux (40) étant poussé sur l'arbre (36) de manière à le disposer sans jeu sur l'arbre (36).

11. Procédé selon la revendication 9 ou 10, l'arbre creux (40) étant relié en force à l'arbre (36) au moyen d'un dispositif de serrage (42) après l'avoir poussé sur l'arbre (36).
